(19) **Europäisches Patentamt**
**European Patent Office**
**Office européen des brevets**

(11) **EP 4 245 150 A1**

(12) **EUROPEAN PATENT APPLICATION**
published in accordance with Art. 153(4) EPC

(43) Date of publication:
**20.09.2023 Bulletin 2023/38**

(21) Application number: **21892014.8**

(22) Date of filing: **15.11.2021**

(51) International Patent Classification (IPC):
***A23L 5/41*** *(2016.01)*

(52) Cooperative Patent Classification (CPC):
**A23L 5/41**

(86) International application number:
**PCT/JP2021/041874**

(87) International publication number:
**WO 2022/102769 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.11.2020 JP 2020190442**

(71) Applicant: **Amano Enzyme Inc.**
**Nagoya-shi**
**Aichi 460-8630 (JP)**

(72) Inventors:
• **TANAKA Ryosuke**
**Konan-shi, Shiga 520-3203 (JP)**
• **YACHI Hiroyuki**
**Kakamigahara-shi, Gifu 509-0109 (JP)**

(74) Representative: **Witthoff Jaekel Steinecke**
**Patentanwälte PartG mbB**
**Postfach 1140**
**52412 Jülich (DE)**

(54) **FOOD-PRODUCT BROWNING AGENT**

(57)    It is an object of the present invention to provide a browning agent for food product, which is capable of browning a food product in a step of heat-cooking the food product. According to the present invention, provided are: a browning agent for food product, comprising glycosidase, polyphenol oxidase or cellulase; a food product comprising the browning agent for food product; and a method for browning a food product, comprising adding glycosidase, polyphenol oxidase or cellulase to the food product, and then heating the food product.

**EP 4 245 150 A1**

**Description**

Technical Field

The present invention relates to a browning agent for food product, comprising polyphenol oxidase, glycosidase or cellulase.

Background Art

In recent years, to respond to social issues such as food loss and waste, a reduction in environmental load, and diversification of consumer needs, alternative meat products made using plants such as soybean and pea as raw materials have attracted worldwide attention. As methods of reproducing the blood color of an alternative meat, the following methods have been known; a method of adding soybean legume hemoglobin (hereafter referred to as "soybean leghemoglobin") to an alternative meat and a method of adding a beet pigment to an alternative meat.

The method of using such a beet pigment is easily accepted by consumers because the beet used as a raw material has been eaten from ancient times over the world. However, the beet pigment is red and thus, is required to change to brown after cooking. It has been known that the beet pigment fades with heat. However, since the beet pigment does not sufficiently fade in a heat-cooking process, the beet is browned with another browning agent, but such browning is not sufficient.

Patent Document 1 discloses that, regarding edible meat products, an uncooked edible meat (with the red color of a beet pigment) is treated by heating to release a stimulant, and that the color of the edible meat is changed to a brown color with the stimulant. Specifically, the Examples of Patent Document 1 disclose that a browning agent is allowed to bind to an inactive yeast cell wall material, and the thus obtained material is added to a food product, which is then cooked, so that the browning agent is released from the yeast cell wall material and the food product is thereby browned.

Non-Patent Document 1 discloses that a red beet has a plurality of endogenous enzymes such as β-glucosidase, polyphenoxy oxidase and peroxidase, and that when these endogenous enzymes are not properly inactivated, it is likely to cause color fading (p. 2368, right column, 1. 12 from the bottom -1. 9 from the bottom).

Patent Document 2 discloses: that the enzymatic color fading and/or browning of food product are considered to occur when pigments are oxidized and/or polymerized by the action of polyphenol oxidase, and brown melanin pigments are thereby formed; and that a method of partially preventing such color fading and/or browning by heating (blanching) or inactivation of enzymes by enzyme inhibitors is applied (paragraph 0007).

Prior Art Documents

Patent Documents

Patent Document 1: JP Patent Publication No. 2018-533945 A
Patent Document 2: JP Patent Publication No. 2001-294768 A

Non-Patent Documents

Non-Patent Document 1: International Journal of Food Science and Technology 2009, 44, 2365-2376

Summary of Invention

Object to be Solved by the Invention

It has been known that the fading of a beet pigment is caused by polyphenol oxidase including laccase, or β-glucosidase as one type of glycosidase. However, it has not been known that cellulase causes the fading of a beet pigment. In addition, it has not been known, either, that laccase, glycosidase or cellulase is added to a food product, so that the food product can be browned in a step of heat-cooking the food product.

It is an object of the present invention to provide a browning agent for food product(s), which is capable of browning food product(s) in a step of heat-cooking the food product(s).

Means for Solving the Object

The present inventors have conducted intensive studies directed towards achieving the aforementioned object. As a result, the present inventors have found that laccase, glycosidase, or cellulase is added to an alternative meat comprising a beet pigment, and the alternative meat is then cooked with heat, so that the fading of the beet pigment can be realized. The present invention has been completed based on these findings.

According to the present invention, the following inventions are provided.

< 1 > A browning agent for food product, comprising glycosidase, polyphenol oxidase or cellulase.
< 2 > The browning agent for food product according to < 1 >, wherein the food product is an alternative meat.
< 3 > The browning agent for food product according to < 1 > or < 2 >, wherein the food product is heated after addition of the browning agent thereto, so that the food product is browned.
< 4 > A food product, comprising the browning agent for food product according to < 1 >
< 5 > A method for browning a food product, comprising adding glycosidase, polyphenol oxidase or cellulase to the food product, and then heating the food product.
< A > Use of glycosidase, polyphenol oxidase or cellulase for producing a browning agent for food product.
< B > Glycosidase, polyphenol oxidase or cellulase, which is for use in the browning of a food product.

Advantageous Effects of Invention

According to the browning agent for food product(s) of the present invention, a food product can be browned in a step of heat-cooking the food product.

Brief Description of Drawings

Fig. 1 shows changes in absorption spectra that are attended with enzymatic browning of beet solutions by glycosidase, cellulase and polyphenol oxidase.
Fig. 2 shows changes in the appearances of pseudo putties by enzyme treatments.

Embodiments of Carrying out the Invention

Hereafter, the embodiments of the present invention will be described in detail.

The browning agent for food product(s) of the present invention comprises glycosidase, polyphenol oxidase, or cellulase.

Glycosidase is a generic term for enzymes that cleave the glycosidic bonds of glycosides and sugars. Glycosidase includes diglycosidase and monoglycosidase, depending on the number of sugar residues to be cleaved. In addition, glycosidase also includes $\beta$-galactosidase, $\alpha$-glucosidase, and $\beta$-glucosidase, depending on the type of bond of sugar residues to be cleaved. $\beta$-Glucosidase is a generic term for enzymes that catalyze reactions of hydrolyzing the $\beta$-D-glucopyranoside bonds of sugars. The origin of $\beta$-glucosidase is not particularly limited, and examples of the origin of $\beta$-glucosidase may include microorganisms such as bacteria or filamentous fungi, plants, and animals. Examples of the microorganisms may include *Asperugillus niger, Trichoderma reesei, Trichoderma viride,* and *Penicillium multicolor.* Examples of the plants may include almonds. As such $\beta$-glucosidase, the following products are commercially available: Aromase (product name; manufactured by Amano Enzyme Co., Ltd.) (Aromase H2), SUMIZYME BGA (product name; manufactured by Shin-Nihon Chemical Co., Ltd.), SPEZYME Cp (product name; manufactured by Genencor Kyowa Co. Ltd.), Naringinase (product name; manufactured by Mitsubishi Tanabe Pharma Corporation), Y-NC (product name; manufactured by Yakult Pharmaceutical Industries, Ltd.), and the like. These commercially available products can be used as $\beta$-glucosidase in the present invention.

Polyphenol oxidase is an enzyme having an action to promote the formation of a polyphenol oxidation form, and a specific example of the polyphenol oxidase may be laccase. Laccase is one type of multi-copper protein, which is an oxidase with low substrate specificity that acts on catechols, hydroquinones, aminophenols, and phenylenediamines. Examples of such laccase may include those derived from plants such as lacquer, and those derived from microorganisms such as bacteria and fungi. Examples of laccase derived from microorganisms may include the enzymes derived from Aspergillus sp., Neurospora sp., Podospora sp., Botrytis sp., Collybia sp., Fomes sp., Lentinus sp., Pleurotus sp., Pycnoporus sp., Pyricularia sp., Trametes sp., Rhizoctonia sp., Rigidoporus sp., Coprinus sp., Psatyrella sp., Myceliophtera sp., Schtalidium sp., Polyporus sp., Phlebia sp., and Coriolus sp.. Among the above-described microorganisms, the laccase used herein is preferably laccase derived from organisms belonging to Trametes sp. Examples of such laccase may include laccase preparations such as Laccase Y120 (derived from Trametes sp.; manufactured by Amano Enzyme Co., Ltd.), and Laccase (derived from *Trametes versicolor;* SIGMA-ALDRICH).

Cellulase is an enzyme that hydrolyzes the glucoside bond of β-1,4-glucan. The cellulase used herein is not particularly limited. For example, microorganism-derived cellulase can be used. Examples of known microorganism-derived cellulase may include cellulases derived from the microorganisms of Trichoderma sp. (e.g. those manufactured by Meiji Seika Co., Ltd., Novozymes A/S, Genencor, Inc., and Amano Enzyme Co., Ltd.), cellulases derived from the microorganisms of Aspergillus sp. (e.g. those manufactured by HBI Enzymes, Inc., and Amano Enzyme Co., Ltd.), and cellulases derived from the microorganisms of Acremonium sp. (e.g. that manufactured by Meiji Seika Kaisha, Limited). The cellulase is not limited to native (wild-type) cellulase, but recombinant cellulase can also be used. In addition, two types of cellulases may also be used in combination. Commercially available cellulase or cellulase preparation may be used. Examples of such commercially available cellulase or cellulase preparation may include Axelase (manufactured by Genencor, Inc.), NS22074 (manufactured by Novozymes A/S), Meicelase and Acremozyme (manufactured by Meiji Seika Kaisha, Limited), Cellulosin AC (manufactured by HBI Enzymes, Inc.), and Cellulase A "Amano" 3 and Cellulase T "Amano" 4 (manufactured by Amano Enzyme Co., Ltd.).

In the present invention, two or more enzymes selected from glycosidase, polyphenol oxidase, and cellulase may be used in combination.

The browning agent for food product(s) of the present invention comprises, at least, glycosidase, polyphenol oxidase or cellulase. The present browning agent may also comprise an excipient, a buffer agent, a suspending agent, a stabilizer, a pH adjuster, a preservative, an antiseptic, a perfume, a thickener, oil and fat, a lubricant, a binder, a binding enhancer, an emulsion stabilizer, a normal saline, and the like, in addition to the above-described glycosidase, polyphenol oxidase or cellulase.

Example of the excipient that can be used herein may include maltose, trehalose, lactose, D-glucose, sorbitol, D-mannitol, sucrose, and glycerol. Examples of the buffer agent that can be used herein may include phosphate, citrate, and acetate. Examples of the stabilizer that can be used herein may include propylene glycol and ascorbic acid. Examples of the pH adjuster that can be used herein may include: organic acids or organic acid salts, such as itaconic acid, succinic acid, tartaric acid, fumaric acid, citric acid, malic acid, adipic acid, gluconic acid, pyrophosphoric acid, acetic acid, lactic acid, α-ketoglutaric acid and phytic acid; inorganic acids or inorganic acid salts, such as carbonic acid; acidic amino acids, such as aspartic acid and glutamic acid; and basic amino acids, such as arginine, lysine and histidine. Examples of the preservative that can be used herein may include phenol, benzalkonium chloride, benzyl alcohol, chlorobutanol, and methylparaben. Examples of the antiseptic that can be used herein may include ethanol, benzalkonium chloride, paraoxybenzoic acid, and chlorobutanol. Examples of the perfume that can be used herein may include: animal perfumes, such as musk, civet, castoreum, and ambergris; plant perfumes, such as anise essential oil, angelica essential oil, ylang-ylang essential oil, iris essential oil, fennel essential oil, orange essential oil, cananga essential oil, caraway essential oil, cardamom essential oil, guaiac wood essential oil, cumin essential oil, spicebush essential oil, cassia essential oil, cinnamon essential oil, geranium essential oil, copaiba balsam essential oil, coriander essential oil, perilla essential oil, cedarwood essential oil, citronella essential oil, jasmine essential oil, ginger grass essential oil, cedar essential oil, spearmint essential oil, Western mint essential oil, star anise essential oil, tuberose essential oil, clove essential oil, neroli essential oil, wintergreen essential oil, Tolu balsam essential oil, patchouli essential oil, rose essential oil, palmarosa essential oil, *hinoki* essential oil, *hiba* essential oil, sandalwood essential oil, petitgrain essential oil, bay essential oil, vetiver essential oil, bergamot essential oil, Peruvian balsam essential oil, Bois de rose essential oil, camphor essential oil, mandarin essential oil, eucalyptus essential oil, lime essential oil, lavender essential oil, linaloe essential oil, lemongrass essential oil, lemon essential oil, rosemary essential oil, and Japanese mint essential oil; and other synthetic perfumes. Examples of the oil and fat that can be used herein may include avocado oil, linseed oil, almond oil, fennel oil, perilla oil, olive oil, orange oil, orange roughy oil, cocoa butter, chamomile oil, carrot oil, cucumber oil, coconut oil, sesame oil, rice oil, safflower oil, shea butter, liquid shea butter, soybean oil, camellia oil, corn oil, rapeseed oil, persic oil, castor oil, sunflower oil, grape seed oil, cottonseed oil, peanut oil, turtle oil, mink oil, egg yolk oil, palm oil, palm kernel oil, Japan wax, coconut oil, beef tallow, and lard. Moreover, oils and fats prepared by modifying the aforementioned oils and fats according to a treatment such as hydrogenation, fractionation, or transesterification can also be utilized. Examples of the lubricant that can be used herein may include: waxes (either plant or animal waxes are applicable), such as beeswax, carnauba wax, whale wax, lanolin, liquid lanolin, reduced lanolin, hard lanolin, candelilla wax, montan wax, shellac wax, rice wax, squalene, squalane, and pristane; and mineral oils, such as liquid paraffin, vaseline, paraffin, ozokeride, ceresin, and microcrystalline wax. Examples of the binder that can be used herein may include soybean protein, egg protein, milk protein, blood protein, casein, and transglutaminase. The binding enhancer that can be used herein may be, for example, polymerized phosphate. The emulsion stabilizer that can be used herein may be, for example, casein sodium. Examples of other additives that may be comprised in the present browning agent may include fatty acids including: natural fatty acids, such as lauric acid, myristic acid, palmitic acid, stearic acid, behenic acid, oleic acid, linoleic acid, linolenic acid, docosahexaenoic acid, eicosapentaenoic acid, 12-hydroxystearic acid, undecylenic acid, tall oil, and lanolin fatty acid; and synthetic fatty acids, such as isononanoic acid, caproic acid, 2-ethylbutanoic acid, isopentanoic acid, 2-methylpentanoic acid, 2-ethylhexanoic acid, and isopentanoic acid.

When the browning agent for food product(s) of the present invention is used in the form of the above-described mixture, the content of polyphenol oxidase, glycosidase or cellulase in the mixture is not particularly limited, as long as it is within a range in which the effects of polyphenol oxidase, glycosidase or cellulase can be exhibited. The content of polyphenol oxidase, glycosidase or cellulase is, for example, 0.1% by weight or more, preferably 1% by weight or more, more preferably 5% by weight or more, and further preferably 10% by weight or more, based on the total weight of the mixture.

The browning agent for food product(s) of the present invention is added to a food product, followed by heating, so that the food product can be browned.

Examples of the method of adding the browning agent for food product(s) of the present invention to a food product may generally include a method comprising injecting a suspension comprising the browning agent for food product(s) into a food product, and then tumbling the food product, a method comprising immersing a food product in an immersion solution comprising the browning agent for food product(s), and a method of mixing a suspension comprising the browning agent for food product(s) with a food product, but the examples of the method are not limited thereto. The temperature applied when the browning agent for food product(s) of the present invention is added to a food product is not particularly limited, and it is generally 4°C to 40°C, preferably 4°C to 30°C, more preferably 4°C to 25°C, and most preferably 4°C to 20°C.

The contact time of the browning agent for food product(s) of the present invention with a food product, which is applied when the browning agent for food product(s) is added to the food product, is, for example, 10 minutes to 4 days, preferably 1 hour to 3 days, more preferably 3 hours to 2 days, and further preferably 6 hours to 2 days. However, if the contact state can be maintained even in the subsequent processing step, the step may proceed to the subsequent processing step immediately after completion of operations such as injection or mixing. Otherwise, when the mixture is preserved under conditions in which the browning agent does not act (e.g. under low-temperature conditions), the contact time may become a long period of time.

The additive amount of the browning agent for food product(s) of the present invention added to a food product is not particularly limited, and the mass of the enzyme may be, for example, 0.001% to 10% by mass, preferably 0.01% to 2.0% by mass, more preferably 0.02% to 1.0% by mass, and further preferably 0.05% to 0.5% by mass, with respect to the mass of the food product. The activity of the enzyme comprised in the browning agent added to a food product is not particularly limited. In the case of polyphenol oxidase, the activity amount of the enzyme to 1 g (mass) of the food product is, for example, 1 to 10000 U, preferably 2 to 1000 U, more preferably 5 to 500 U, and further preferably 10 to 200 U. In the case of glycosidase, the activity amount of $\beta$-glucosidase to 1 g (mass) of the food product is, for example, 0.01 U to 1000 U, preferably 0.05 to 100 U, more preferably 0.1 to 50 U, and further preferably 0.5 to 10 U. In the case of cellulase, the activity amount of the enzyme to 1 g (mass) of the food product is, for example, 0.001 U to 300 U, preferably 0.003 to 30 U, more preferably 0.01 to 15 U, and further preferably 0.03 to 6 U. The activity of the enzyme comprised in the browning agent added to a food product is not particularly limited. In the case of polyphenol oxidase, the activity amount of the enzyme to 1 g (mass) of a beet is, for example, 10 to 100000 U, preferably 20 to 50000 U, more preferably 50 to 30000 U, and further preferably 100 to 20000 U. In the case of glycosidase, the activity amount of $\beta$-glucosidase to 1 g (mass) of the food product is, for example, 0.2 U to 10000 U, preferably 0.5 to 5000 U, more preferably 1 to 3000 U, and further preferably 5 to 2000 U. In the case of cellulase, the activity amount of the enzyme to 1 g (mass) of the food product is, for example, 0.05 U to 500 U, preferably 0.1 to 200 U, more preferably 0.3 to 100 U, and further preferably 0.5 to 50 U.

The activity of polyphenol oxidase can be measured by the following method.

1 mL of A phenol reagent solution (0.25 mol/L) is placed in a glass cell, and 1 mL of a 4-aminoantipyrine reagent solution (0.009 mol/L) and 0.5 mL of a buffer solution for polyphenol oxidase activity test are then added to and mixed with the reagent solution, followed by heating at 30°C for 10 minutes. Thereafter, 0.5 mL of a sample solution that has previously been heated to 30°C is added to and mixed with the reaction solution. Ten seconds and forty seconds after addition of the sample solution, the absorbance at a wavelength of 505 nm is measured, and a change in the absorbance at a wavelength of 505 nm generated for 30 seconds is obtained. When the absorbance is increased by 0.1 for 1 minute, the amount of the enzyme contained in 1 mL of the reaction solution is defined to be 1 unit (1 U).

The activity of $\beta$-glucosidase can be measured by the following method.

0.50 g of D(-)-salicin is weighed, and water is then added to the D(-)-salicin, so that the D(-)-salicin is dissolved therein to obtain 50 mL of a solution. The thus obtained solution is defined to be a substrate solution. Thereafter, 3 mL of an acetate buffer solution (0.1 mol/L) with pH 4.0 is weighed in a 50-mL Nessler tube, and 1 mL of the substrate solution is added thereto, followed by heating at 40°C for 10 minutes. After that, 1 mL of a sample solution is added to the reaction solution, and the obtained solution is immediately mixed by shaking. The thus mixed solution is heated at 40°C for 30 minutes. To this reaction solution, 2 mL of a Somogyi reagent solution (I) is added and is mixed by shaking, and the mouth of the Nessler tube is lightly closed with a lid. The tube is heated in a water bath for 20 minutes. After cooling the tube, 1 mL of a Nelson reagent solution is added to the reaction solution, and is then mixed by fully shaking, until a red precipitate of cuprous oxide is completely dissolved in the solution. Thereafter, the reaction solution is left at room temperature for about 20 minutes, and water is then added to the reaction solution to a total amount of 25 mL. The thus obtained solution is defined to be a test solution.

Separately, 3 mL of an acetate buffer solution (0.1 mol/L) with pH 4.0 is weighed into a 50-mL Nessler tube, and 1 mL of the substrate solution is then added thereto. After that, 2 mL of a Somogyi reagent solution (I) is added and is mixed by shaking, and 1 mL of the sample solution is then added. The mouth of the Nessler tube is lightly closed with a lid. The tube is heated in a water bath for 20 minutes, and thereafter, the same operations as those for preparation of the test solution are carried out, so as to prepare a comparative solution. The thus obtained test solution and comparative solution are measured in terms of the absorbance at a wavelength of 500 nm. Using glucose solutions (0.10, 0.15, 0.20, 0.25, and 0.30 mg/5 mL), a calibration curve is prepared. Under these conditions, the amount of an enzyme that generates a reduced sugar corresponding to 1 mg of glucose for 1 minute is defined to be 100 units, and the enzymatic activity is calculated according to the following equation:

$$\text{Activity (U/g) of } \beta\text{-glucosidase} = ((A1-A2)-b)/a \times 1/30 \times 100 \times n,$$

wherein

A1: Absorbance of the test solution at a wavelength of 500 nm,
A2: Absorbance of the comparative solution at a wavelength of 500 nm,
1/30: Conversion coefficient to 1 minute,
100: Conversion coefficient to 100 units,
a: Inclination of a glucose calibration curve,
b: Section of a glucose calibration curve, and
n: Dilution factor per gram of a sample.

The activity of cellulase can be measured by the following method.

0.67 g of Carboxymethyl cellulose sodium is weighed, and 50 mL of water is then added thereto, so that the carboxymethyl cellulose sodium is dissolved therein by heating. After cooling the reaction solution, 10 mL of an acetate buffer solution (1 mol/L) with pH 5.0 is added to the solution, and water is then added thereto to a total amount of 100 mL. The thus obtained solution is defined to be a substrate solution. Thereafter, 4 mL of the substrate solution is weighed, and is then heated at 37°C for 10 minutes. After that, 1 mL of a sample solution is added to the reaction solution, and the obtained solution is immediately mixed by shaking. The thus mixed solution is heated at 37°C for 30 minutes. To this reaction solution, 2 mL of a Somogyi reagent solution (I) is added and mixed, and is then heated in a water bath for 30 minutes. After cooling the reaction solution, 2 mL of a Nelson reagent solution is added to this reaction solution, and is then mixed by fully shaking. Then, 3 mL of a sodium hydroxide reagent solution (0.5 mol/L) is added and is then mixed by shaking, so that a precipitate is dissolved therein. The thus obtained solution is left for 20 minutes, and thereafter, an acetate buffer solution (1 mol/L) with pH 4.5 is added to the solution to a total amount of 25 mL. After that, 1 mL of the obtained solution is weighed, and 9 mL of an acetate buffer solution (1 mol/L) with pH 4.5 is then added thereto and mixed therewith, so as to prepare a test solution. Separately, 1 mL of a sample solution is weighed, and 2 mL of a Somogyi reagent solution (I) is added and is mixed by shaking. Thereafter, 4 mL of the substrate solution is added and mixed, and the mixed solution is then heated in a water bath for 30 minutes. After cooling the reaction solution, the same operations as those for preparation of the test solution are carried out, so as to prepare a comparative solution. When cloudiness is found in the test solution and the comparative solution, in each of which the absorbance is to be measured, the test solution and the comparative solution are subjected to centrifugation, and the absorbance of each supernatant is measured. The test solution and the comparative solution are measured in terms of the absorbance at a wavelength of 750 nm, while water is used as a control. Using glucose solutions (0.10, 0.20, 0.30, 0.40, and 0.50 mg/ mL), a calibration curve is prepared. Under these conditions, the amount of an enzyme that brings an increase in the reducing power corresponding to 1 μmol glucose for 1 minute is defined to be 1 unit, and the enzymatic activity is calculated according to the following equation:

$$\text{Cellulose saccharifying power (U/g)} = (A1-A2)/a \times 1/30 \times 1/0.180 \times n,$$

wherein

A1: Absorbance of a test solution at a wavelength of 750 nm,
A2: Absorbance of a comparative solution at a wavelength of 750 nm,

1/30: Conversion coefficient to 1 minute,
1/0.180: 1 $\mu$mol glucose = 0.180 mg,
a: Inclination of a glucose calibration curve, and
n: Dilution factor per gram of a sample.

The food product applied in the present invention is not particularly limited, as long as it is a food product to be subjected to a heat treatment. A food product comprising a beet pigment is preferable. The food product comprising a beet pigment may be, for example, an alternative meat comprising a beet pigment. The alternative meat means a meat product prepared using, for example, a plant-derived protein (plant protein material), instead of using an animal meat such as a pork, beef or chicken meat. Specific embodiments of the alternative meat may include hamburg, meatball, patty, meatloaf, minced meat cutlet, putty, and the like.

The form of such a plant protein material is not particularly limited, and either a powdered or textured plant protein material may be used. The textured plant protein material has been known as a material for alternative meats (fake meats). A typical example of the textured plant protein material may be a meat-like textured material prepared by extruding a raw material mixture comprising a plant protein and water with an extruder or the like, and then drying or freezing the obtained mixture. The type of the plant protein material is not particularly limited, and examples thereof may include: proteins of pulses such as soybeans, fava beans, peas, chickpeas, mung beans, lupine beans, and kidney beans; proteins of cereals such as barley, rice, wheat, rye, oats, buckwheat, millet, foxtail millet, teff, quinoa, and corn; proteins of nuts and seeds, such as hemp seeds (industrial hemp), canary seeds, flaxseeds, almonds, cashews, hazelnuts, pecan nuts, macadamia nuts, pistachios, walnuts, Brazil nuts, peanuts, coconuts, pili nuts, chestnut, sesame, and pine nuts; and proteins of algae.

Moreover, as materials for alternative meats, insect proteins (cricket-derived proteins, etc.) or microorganism-derived proteins (yeast-derived proteins, filamentous fungus-derived proteins, mushroom-derived proteins, etc.) can also be used, as well as the aforementioned plant proteins.

The pigment comprised in the food product is not particularly limited, as long as the browning of the food product can be achieved. For example, the food product comprises a certain pigment compound as a component. The certain pigment compound is selected from the group consisting of betalain, anthocyanin, curcuminoid, polyhydroxychalcone, and polyhydroxyanthraquinone. In addition, examples of the origin of the pigment may include: plants, such as beet (which indicates "Beta vulgaris s sp. vulgaris var. Vulgaris" (the beet that is also called "table beet," "red beet," or "beetroot")), red radish, purple sweet potato, red perilla, purple cabbage, safflower, and turmeric; and organisms such as insects. More specific examples of the pigment may include beet pigments (including, as betalain, betacyanin and betaxanthin), red radish pigments (including, as anthocyanin, pelargonidin and cyanidin), purple sweet potato pigments (including, as anthocyanin, cyanidin and peonidin), red perilla pigments (including, as anthocyanin, shisonin and malonylshisonin), purple cabbage pigments (including, as anthocyanin, rubrobrassin), safflower pigments (including, as polyhydroxychalcone, safromine and carthamine), turmeric pigments (including, as curcuminoid, curcumin), and cochineal pigments (including, as polyhydroxyanthraquinone, carminic acid). Among these, beet pigments are preferable. As a protein material for food product(s), a plant protein material comprising a pigment can be used. However, from the viewpoint of controlling the degree of browning, it is preferable to add a pigment, apart from the plant protein material.

The means for heat treatment is not particularly limited, as long as the browning of the food product can be achieved. The food product may be heated on a frying pan, or internal heating such as microwave heating (microwave oven) or far infrared heating may be applied. Otherwise, external heating may also be applied by dry heating using a dry heat oven or the like, or by wet heating using a steam oven or the like.

The temperature and the time required for the heat treatment are not particularly limited, as long as the browning of the food product can be achieved. In general, the browning of the food product can be achieved by heating the food product from the temperature ranging from refrigeration temperature to normal temperature, to a temperature that exceeds the temperature range in which the enzyme acts. For example, when an oven is used, the applied temperature is 170°C to 250°C, preferably 180°C to 230°C, and more preferably 190°C to 220°C. Moreover, the temperature of the inside of the food product upon completion of the heat treatment is not particularly limited, as long as the browning of the food product can be achieved. For example, the temperature of the inside of the food product is 60°C to 100°C. From the viewpoint of inactivation of the used enzyme, it is preferably 70°C to 100°C, and more preferably 80°C to 90°C.

The time required for the heat treatment is generally 1 minute to 60 minutes, preferably 1 minute to 30 minutes, and more preferably 1 minute to 15 minutes.

The present invention will be specifically described in the following examples. However, these examples are not intended to limit the scope of the present invention.

Examples

Example 1: Confirmation of browning effects of β-glucosidase, cellulase and polyphenol oxidase

< Methods >

Fine beet powders (commercially available product: Beet Powders Made in Kumamoto (Kyushu Vegeful)) were dissolved in a 100 mM sodium acetate buffer solution (pH 5.0) to prepare a solution containing 1% by mass of beet. To the solution containing 1% by mass of beet, β-glucosidase (Aromase H2; hereinafter referred to as "GLYH-2") (Amano Enzyme Co., Ltd.), cellulase (Cellulase T "Amano" 4; hereinafter referred to as "CT-4") (Amano Enzyme Co., Ltd.), or polyphenol oxidase (Laccase Y120; hereinafter referred to as "LC-Y120") (Amano Enzyme Co., Ltd.) was added in the activity amount shown in the following Table 1. The obtained mixture was reacted under conditions of 60°C, 1 hour, and 100 rpm. After completion of the reaction, the color of the reaction mixture was confirmed by visual observation, and at the same time, the absorbance in a visible light range (380 to 780nm) was measured.

< Results >

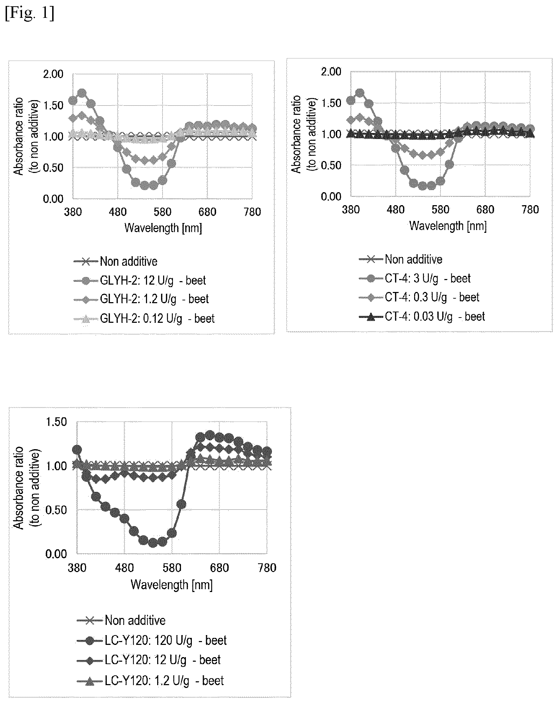

The results are shown in Table 1 and Figure 1.
From the results shown in Table 1 and Figure 1, browning could be confirmed from 1.2 U or more of GLYH-2 (β-glucosidase), 0.3 U or more of CT-4 (cellulase), and 120 U or more of LC-Y120 (polyphenol oxidase).

[Table 1]

Table 1: Changes in absorbances (380 nm, 480 nm, and 538 nm) attended with enzymatic browning of beet solutions

| Type of enzyme | Activity (U) of enzyme added per gram of beet powders | Color | 380-nm absorbance ratio to non additive | 480-nm absorbance ratio to non additive | 538-nm absorbance ratio to non additive |
|---|---|---|---|---|---|
| Non additive | - | Red | 1.00 | 1.00 | 1.00 |
| β-Glucosidase (GLYH-2) | 0.12 | Red | 1.06 | 1.01 | 0.96 |
| | 1.2 | Brown | 1.29 | 0.91 | 0.61 |
| | 12 | Brown | 1.58 | 0.82 | 0.22 |
| Cellulase (CT-4) | 0.03 | Red | 1.02 | 0.99 | 0.98 |
| | 0.3 | Brown | 1.22 | 0.91 | 0.66 |
| | 3 | Brown | 1.54 | 0.77 | 0.17 |
| Polyphenol oxidase (LC-Y120) | 1.2 | Red | 1.03 | 1.00 | 0.99 |
| | 12 | Red | 1.03 | 0.92 | 0.87 |
| | 120 | Brown | 1.18 | 0.40 | 0.13 |
| | 600 | Brown | - | - | - |
| | 1200 | Brown | - | - | - |

Example 2: Confirmation of browning effects of other enzyme agents

< Methods >

Fine beet powders (commercially available product: Beet Powders Made in Kumamoto (Kyukoku Vegeful)) were used to prepare a solution containing 1% by mass of beet, and 4.5 mL each of the beet solution was dispensed in a test tube. The solution containing 1% by mass of beet contained in the test tube was cooled, and 0.5 mL of each enzyme solution (10 mg/1 mL) (a solution containing 0.1% by mass of each enzyme) was added thereto. The obtained mixture was reacted at 40°C for 30 minutes, and the absorbances at 480 nm and at 538 nm were measured.

< Results >

The results are shown in Table 2.

[Table 2]

| Type of enzyme | Name of enzyme | 480-nm absorbance ratio to non additive | 538-nm absorbance ratio to non additive |
|---|---|---|---|
| Non additive | - | 1.00 | 1.00 |
| α-Amylase | Biozyme A | 0.92 | 0.95 |
| | Kleistase SD8 | 0.93 | 0.97 |
| β-Amylase | β-Amylase F "Amano" | 0.93 | 0.96 |
| Glucoamylase | Gluczyme AF6 | 0.93 | 0.96 |
| Mannanase | Mannanase BGM "Amano" 10 | 0.92 | 0.95 |
| Cellulase | CellulaseT "Amano" 4 | 0.85 | 0.54 |
| Hemicellulase | Hemicellulase "Amano" 90 | 0.94 | 0.97 |
| Pectinase | Pectinase G "Amano" | 0.94 | 0.97 |
| Lactase | Lactase F "Amano" | 0.95 | 0.98 |
| Glucose oxidase | Hidelase 15 | 0.96 | 1.00 |
| Protease | Proteax | 0.93 | 0.96 |
| | Newlase F3G | 0.91 | 0.95 |
| | Papain W-40 | 0.92 | 0.96 |
| | Bromelain F | 1.00 | 1.02 |
| | Pancreatin F | 0.93 | 0.96 |
| | Protease A "Amano" SD | 0.93 | 0.96 |
| | Protease M "Amano" SD | 0.95 | 0.97 |
| | Protease P "Amano" 3SD | 0.96 | 0.99 |
| | Peptidase R | 0.97 | 1.00 |
| | Thermoase PC10F | 0.98 | 1.02 |
| | Protin SD-AY10 | 1.00 | 1.04 |
| | Protin SD-NY10 | 1.01 | 1.05 |
| Glutaminase | Glutaminase SD-C100S | 1.01 | 1.06 |
| Nuclease | Nuclease "Amano" G | 1.01 | 1.07 |
| Deaminase | Deamizyme G | 1.02 | 1.06 |

(continued)

| Type of enzyme | Name of enzyme | 480-nm absorbance ratio to non additive | 538-nm absorbance ratio to non additive |
|---|---|---|---|
| Lipase | Lipase A "Amano" 6 | 1.03 | 1.08 |
| | Lipase AY "Amano" 30SD | 1.03 | 1.09 |
| | Lipase GS "Amano" 250G | 1.05 | 1.09 |
| | Lipase R "Amano" | 1.03 | 1.10 |
| | Lipase DF "Amano" 15 | 1.05 | 1.11 |
| | Lipase MER "Amano" | 1.05 | 1.11 |
| Polyphenol oxidase | Laccase Y120 | 0.79 | 0.37 |

< Consideration >

The pigment contained in the beet is betalain (nitrogen pigment). Such betalain includes two types of pigments. The absorption maximum wavelengths of the two pigments are 480 nm (betaxanthin) and 538 nm (betacyanin). The wavelength of each pigment was measured. In the present study, using cellulase and polyphenol oxidase, the degradation tendency of the red pigment betacyanin could be confirmed.

From the results of Examples 1 and 2, it could be confirmed that GLYH-2 (β-glucosidase), LC-Y120 (polyphenol oxidase) and CT-4 (cellulase) have browning effects.

Example 3: Confirmation of effect to brown pseudo putty prepared using pea protein

< Methods >

The following materials were mixed with one another to prepare a pseudo putty (pH 5.0), and the pseudo putty was then cooled, so that the internal temperature thereof became 4°C to 10°C. Subsequently, each enzyme was added to the pseudo putty, so that the amount of the activity per gram (weight) of the putty could be as shown in the table below, and the mixture was fully kneaded. Thereafter, one surface of the putty was cooked at 200°C for 7 minutes in a preheated oven, and both surfaces thereof were cooked. It was confirmed with a thermometer that the central temperature of the pseudo putty immediately after cooking became 80°C to 90°C.

The color of the central section of the pseudo putty was measured using a spectrophotometric colorimeter (CM-700d, KONICA MINOLTA SENSING), and was evaluated using L*a*b*color system. The axis L* is a luminosity axis indicating brightness, and when the numerical value is close to 100, the color becomes nearly white. The axis a* indicates green to red, and the higher the numerical value, the stronger the red color. The axis b* indicates blue to yellow, and the higher the numerical value, the stronger the yellow color.

[Table 3]

| Raw material (product name) | Manufacturer | Additive amount |
|---|---|---|
| PROPULSE (Pea protein) | ORGANO FOODTECH CORP. | 100 g |
| Bamboo fiber 75 | Mitsui Sugar Co., Ltd. | 2 g |
| *Akadama* Dextrin 102D | NIPPON STARCH CHEMICAL CO., LTD. | 2 g |
| Fine beet powder | Kyukoku Vegeful | 2 g |
| Acetic acid | FUJIFILM Wako Pure Chemical Corporation | 2 g |
| Water | - | 200 mL |

< Results >

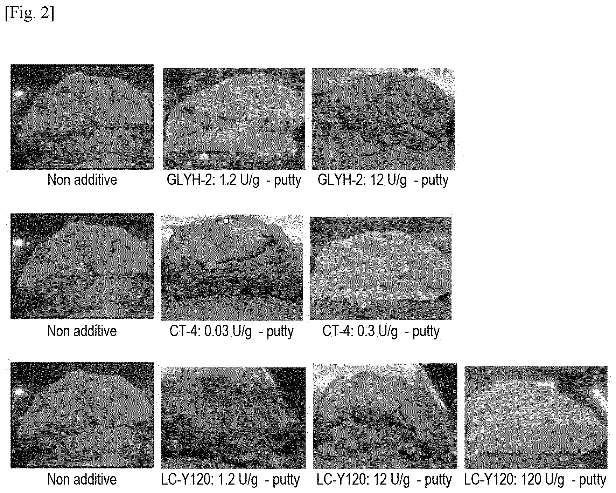

The results are shown in Figure 2 and Table 4.

[Table 4]

Table 4: Change in color values of pseudo putties

| Type of enzyme | Activity (U) added to 1 g (weight) of putty | Luminosity (L*) | Hue/saturation | | Color difference ($\angle E^*_{ab}$) |
|---|---|---|---|---|---|
| | | | a* | b* | |
| Non additive | - | 60.6 | 16.5 | 13.6 | - |
| GLYH-2 | 1.2 | 62.0 | 13.0 | 17.2 | 5.1 |
| | 12 | 61.6 | 10.5 | 17.4 | 7.1 |
| CT-4 | 0.03 | 62.1 | 14.3 | 17.8 | 4.9 |
| | 0.3 | 66.4 | 7.8 | 24.3 | 14.9 |
| LC-Y120 | 1.2 | 61.8 | 14.6 | 14.8 | 2.5 |
| | 12 | 65.7 | 7.8 | 21.7 | 12.9 |
| | 120 | 64.7 | 8.5 | 20.1 | 11.0 |
| * For calculation of color difference, the pseudo putty with "non additive" of enzyme was used as a reference color. | | | | | |

The browning of the pseudo putties by addition of the enzymes under all conditions could be confirmed by visual observation. In addition, from the measurement results using a spectrophotometric colorimeter, it could be confirmed that the light reflectance of b* (red color) decreased, while the light reflectance of a* (yellow color) increased. Also from these results, it was suggested that the beet pigment be browned.

The enzyme activity capable of browning the pseudo putty (per gram of the pseudo putty) was 1.2 U or more of GLYH-2 (β-glucosidase), 0.03 U or more of CT-4 (cellulase), and 1.2 U or more of LC-Y120 (polyphenol oxidase).

Besides, if taking into consideration that a heat treatment (blanching) is generally carried out at a temperature of 70°C or higher in order to prevent enzymatic browning, the putty that can be browned by cooking, as shown in Example 3, is an unexpected effect.

Industrial Applicability

According to the present invention, since food product(s) can be browned by heating, alternative meals with high product value can be provided.

**Claims**

1.  A browning agent for food product, comprising glycosidase, polyphenol oxidase or cellulase.

2.  The browning agent for food product according to claim 1, wherein the food product is an alternative meat.

3.  The browning agent for food product according to claim 1 or 2, wherein the food product is heated after addition of the browning agent thereto, so that the food product is browned.

4.  A food product, comprising the browning agent for food product according to claim 1.

5.  A method for browning a food product, comprising adding glycosidase, polyphenol oxidase or cellulase to the food product, and then heating the food product.

[Fig. 1]

[Fig. 2]

| Non additive | GLYH-2: 1.2 U/g - putty | GLYH-2: 12 U/g - putty |
| Non additive | CT-4: 0.03 U/g - putty | CT-4: 0.3 U/g - putty |
| Non additive | LC-Y120: 1.2 U/g - putty | LC-Y120: 12 U/g - putty | LC-Y120: 120 U/g - putty |

## INTERNATIONAL SEARCH REPORT

| International application No. |
|---|
| **PCT/JP2021/041874** |

### A. CLASSIFICATION OF SUBJECT MATTER

*A23L 5/41*(2016.01)i
FI:   A23L5/41

According to International Patent Classification (IPC) or to both national classification and IPC

### B. FIELDS SEARCHED

Minimum documentation searched (classification system followed by classification symbols)

A23L; A23J

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII); CAplus/REGISTRY/FSTA/MEDLINE/EMBASE/BIOSIS (STN)

### C. DOCUMENTS CONSIDERED TO BE RELEVANT

| Category* | Citation of document, with indication, where appropriate, of the relevant passages | Relevant to claim No. |
|---|---|---|
| X | JP 4-262731 A (SOCIETE DES PRODUITS NESTLE S.A) 18 September 1992 (1992-09-18) claim 1, paragraphs [0001], [0016] | 1, 3-5 |
| Y | claim 1, paragraphs [0001], [0016] | 1-5 |
| X | JP 2019-516372 A (THE COCA-COLA COMPANY) 20 June 2019 (2019-06-20) paragraphs [0004], [0014]-[0015] | 1, 4 |
| Y | paragraphs [0004], [0014]-[0015] | 1-5 |
| X | WO 2011/053106 A1 (UNIVERSITI PUTRA MALAYSIA) 05 May 2011 (2011-05-05) p. 1, line 24 to p. 2, line 8 | 1, 4 |
| Y | p. 1, line 24 to p. 2, line 8 | 1-5 |
| Y | JP 62-158473 A (TAIYO FISHERY CO LTD) 14 July 1987 (1987-07-14) claims, p. 1, right column, lines 1-11, p. 2, upper left column, lines 1-10, p. 2, upper left column, lines 15-19, examples 1-2 | 1-5 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 December 2021** | **18 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2021/041874** |

### C. DOCUMENTS CONSIDERED TO BE RELEVANT

| Category* | Citation of document, with indication, where appropriate, of the relevant passages | Relevant to claim No. |
|---|---|---|
| Y | 佐藤恭子ほか, ビートレッドの成分分析及び加熱実験, 日本食品化学学会誌, 1997, vol. 4, no. 2, pp. 120-125, DOI: 10.18891/jjfcs.4.2_120<br>p. 121, lines 10-21, (SATO, Kyoko et al. Pigment Analysis and Heating Experiment of Beet Red. Japanese Journal of Food Chemistry and Safety.) | 1-5 |
| A | JP 2018-533945 A (SAVAGE RIVER, INC) 22 November 2018 (2018-11-22)<br>entire text | - |
| A | CN 111849197 A (ZHONGSHAN TORCH POLYTECHNIC) 30 October 2020 (2020-10-30)<br>entire text | - |
| A | AZEREDO, Henriette M. C. Betalains: properties, sources, applications, and stability - a review. International Journal of Food Science and Technology. 17 November 2009, vol. 44, no. 12, pp. 2365-2376, DOI: 10.1111/j.1365-2621.2007.01668.x<br>entire text | - |
| A | JP 2001-294768 A (NIPPON SHOKUHIN KAKO CO LTD) 23 October 2001 (2001-10-23)<br>entire text | - |

Form PCT/ISA/210 (second sheet) (January 2015)

**INTERNATIONAL SEARCH REPORT**
Information on patent family members

International application No.

**PCT/JP2021/041874**

| Patent document cited in search report | | | Publication date (day/month/year) | Patent family member(s) | | | Publication date (day/month/year) |
|---|---|---|---|---|---|---|---|
| JP | 4-262731 | A | 18 September 1992 | US | 5118514 | A | |
| | | | | claim 1, column 1, lines 5-11, column 3, lines 42-51 | | | |
| | | | | EP | 481249 | A1 | |
| | | | | DE | 69110398 | C | |
| | | | | ES | 2073637 | T | |
| | | | | DK | 481249 | T | |
| | | | | AT | 123628 | T | |
| | | | | CA | 2049096 | A1 | |
| JP | 2019-516372 | A | 20 June 2019 | US | 2019/0343153 | A1 | |
| | | | | paragraphs [0004], [0025]-[0026] | | | |
| | | | | WO | 2017/192967 | A1 | |
| | | | | EP | 3451853 | A1 | |
| | | | | AU | 2017260170 | A | |
| | | | | CN | 109310118 | A | |
| | | | | MX | 2018013538 | A | |
| | | | | BR | 112018072816 | A | |
| WO | 2011/053106 | A1 | 05 May 2011 | (Family: none) | | | |
| JP | 62-158473 | A | 14 July 1987 | (Family: none) | | | |
| JP | 2018-533945 | A | 22 November 2018 | US | 2017/0105438 | A1 | |
| | | | | entire text | | | |
| | | | | US | 2018/0310599 | A1 | |
| | | | | US | 2018/0310599 | A1 | |
| | | | | GB | 2558130 | A | |
| | | | | WO | 2017/070303 | A1 | |
| | | | | EP | 3361881 | A1 | |
| | | | | CA | 3002809 | A1 | |
| | | | | AU | 2016342157 | A | |
| | | | | KR | 10-2018-0084808 | A | |
| | | | | CN | 108471779 | A | |
| | | | | MX | 2018004727 | A | |
| | | | | BR | 112018008097 | A | |
| | | | | CL | 2018001030 | A | |
| | | | | IL | 258677 | D | |
| CN | 111849197 | A | 30 October 2020 | (Family: none) | | | |
| JP | 2001-294768 | A | 23 October 2001 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018533945 A

- JP 2001294768 A

**Non-patent literature cited in the description**

- *International Journal of Food Science and Technology,* 2009, vol. 44, 2365-2376